# EUROPEAN PATENT APPLICATION

(11) **EP 1 309 212 A2**
(43) Date of publication of application: **07.05.2003**
(21) Application number: 02024448.9
(22) Date of filing: 29.10.2002
(51) Int. Cl.: H04Q 7/22

(54) **Method and apparatus for obtaining and processing position information**

(30) Priority: 31.10.2001 JP 2001333614
(71) Applicant: NEC CORPORATION, Tokyo (JP)
(72) Inventor: Ichimura, Shigehiro, Minato-ku, Tokyo (JP)
(74) Representative: VOSSIUS & PARTNER

(57) **Abstract**

The position information processing terminal (10) obtains a position of a user and when a current position of the user is inside of a predetermined region set in advance, refrains from transmitting position information to a server to make no request for position related information, thereby protecting privacy. In addition, switching position information of the user between transmission enabled and disabled every time the user comes in and out of a certain region realizes control of transmission/non-transmission of position information every time the user passes through a specific region.

## Description

The present invention relates to a position information processing terminal and a position information supply system, and a position information processing method and a control program therefor and, more particularly, to a position information processing terminal and a position information supply system, and a position information processing method which enable position information indicative of a position of a user to be transmitted to a server through a communication network to supply position related information which is related to the position information in question from the server.

In recent years, there have been realized systems for supplying various services based on position information of a user using a portable terminal. Provided is, for example, service of supplying, based on a user's current position, information related to its neighborhood. An example of a position information supply system for use in such service will be described in brief.

A portable terminal of a user and a position related information supply server for supplying the portable terminal with information are connected to each other through a mobile communication network.

When position information about a position at which a user currently locates himself/herself is notified to the position related information supply server through the mobile communication network by the user's use of his/her own portable terminal, information related to the neighborhood of the position, for example, information about shops such as dining and drinking places and amusement facilities, traffic information and information about a nearest station is notified to the portable terminal that the user has from the position related information supply server through the mobile communication network. By visually displaying the notified information, the portable terminal enables the user to obtain these position related information with ease.

Japanese Patent Laying-Open (Kokai) No. Heisei 10-21259, for example, discloses the position input type portable information retrieval device, the information retrieval server and the information retrieval system which enable preferential retrieval and display of network information close in a distance to a position where the information retrieval device is used.

According to the technique, a terminal position acquiring means obtains a physical position of use of the information retrieval device which is a portable terminal and sends the same to the information retrieval server. Using a table of correspondence between a physical position obtained from position related information contained in each information of a distributed data base and an information address, the information retrieval server calculates a distance between the use position of the portable terminal and a physical position related to each information and based on the calculation result, preferentially selects an address of information about a place close in distance and returns the same to the information retrieval device. The information retrieval device displays a list for selecting information to be retrieved to execute retrieval/read according to user's input operation.

Using such a technique to enable the portable terminal that the user has to periodically measure a current position realizes a system in which the portable terminal measures a current position and continuously transmits position information to the information retrieval server to continuously supply the user with related information about a place close to the position of the user. Such a system will be a position information supply system which continuously supplies users with information which is close to them and which is well worth using.

System of this kind has a problem that since information about a position at which a user locates himself/herself is notified through a mobile communication network to a position related information supply server, that is, an information supplier, without any countermeasure, information about where a user using a portable terminal is located will be notified to a position related information supplier, resulting in failing to protect the user's privacy related to the user's location.

This problem is serious in a case in particular where a terminal that a user owns receives provision of such service as position related information supply with which the terminal provides its location all the time and receives information related to the position. An example of such service is, similarly to the technique disclosed in the above-described Japanese Patent Laying-Open (Kokai) No. Heisei 10-21259, the service of extracting information about a position close in distance thereto and supplying the information to a user by a server. In such service, the problem will be serious.

More specifically, service of this kind requires continuous calculation of a distance between a user's current position and a position attached to information stored in the server and therefore requires the user's terminal to continuously transmit a user's current position. As a result, even when a user is at a place having a location that the user does not want to be known, i.e., a private place in the neighborhood of the user's house, there is a danger that the terminal might keep supplying position information without the user's noticing it.

An object of the present invention is to provide a position information processing terminal and a position information supply system, and a position information processing method which intend to protect privacy of a user who is provided with position related information, and an operation control program therefor.

According to the first aspect of the invention, a position information processing terminal for transmitting position information indicative of a position of a user to a server through a communication network and receiving position related information which is related to the position information from the server, comprises means for transmitting the position information when the position of the user is outside of a region set in advance.

In the preferred construction, the position information processing terminal may further comprise region setting means for setting and storing the region, and means for determining whether the position information represents the outside of the region or not and when the information represents the outside of the region, transmitting the position information to the server through the communication network.

In another preferred construction, the region setting means includes input means for receiving input of a set region and storage means for storing an input region.

According to the second aspect of the invention, a position information processing terminal for transmitting position information indicative of a position of a user to a server through a communication network and receiving position related information which is related to the position information from the server, comprises means for determining whether the user has moved from outside into a region set in advance or moved out of the region based on the position information to set transmission enabled/disabled of the position information according to the determination result, and means for transmitting the position information when the transmission enabled/disabled setting represents enabled.

In the preferred construction, the position information processing terminal may further comprise storage means for storing position information of the user, and a transmission enabled/disabled flag for storing information of the transmission enabled/disabled set, wherein
determination is made based on a current position of the user which is newly obtained and the position information stored in the storage means whether the user has moved from outside into the region set in advance or moved out of the region.

According to the third aspect of the invention, a position information processing method in a position information processing terminal for transmitting position information indicative of a position of a user to a server through a communication network and receiving position related information which is related to the position information from the server, comprising the step of
transmitting the position information when the position of the user is outside of a region set in advance.

In the preferred construction, the position information processing method further comprising the steps of
setting and storing the region, and
determining whether the position information represents the outside of the region or not and when the information represents the outside of the region, transmitting the position information to the server through the communication network.

According to another aspect of the invention, a position information processing method in a position information processing terminal for transmitting position information indicative of a position of a user to a server through a communication network and receiving position related information which is related to the position information from the server, comprising the steps of
determining whether the user has moved from outside into a region set in advance or moved out of the region based on the position information,
setting transmission enabled/disabled of the position information according to the determination result, and
transmitting the position information when the transmission enabled/disabled setting represents enabled.

According to another aspect of the invention, a program for making a computer to execute a position information processing method in a position information processing terminal for transmitting position information indicative of a position of a user to a server through a communication network and receiving position related information which is related to the position information from the server, comprising the function of
transmitting the position information when the position of the user is outside of a region set in advance.

According to another aspect of the invention, a program for making a computer to execute a position information processing method in a position information processing terminal for transmitting position information indicative of a position of a user to a server through a communication network and receiving position related information which is related to the position information from the server, comprising the functions of
determining whether the user has moved from outside into a region set in advance or moved out of the region based on the position information,
setting transmission enabled/disabled of the position information according to the determination result, and
transmitting the position information when the transmission enabled/disabled setting represents enabled.

According to another aspect of the invention, a position information supply system including a position information processing terminal for transmitting position information indicative of a position of a user through a communication network and a server for receiving the position information from the communication network to supply position related information which is related to the position information to the position information processing terminal, wherein
the position information processing terminal
transmits the position information when the position of the user is outside of a region set in advance.

According to a further aspect of the invention, a position information supply system including a position information processing terminal for transmitting position information indicative of a position of a user through a communication network and a server for receiving the position information from the communication network to supply position related information which is related to the position information to the position information processing terminal, wherein
the position information processing terminal includes
means for determining whether the user has moved from outside into a region set in advance or moved out of the region based on the position information and setting transmission enabled/disabled of the position information according to the determination result, and
transmission means for transmitting the position information when the transmission enabled/disabled setting represents enabled.

According to a further aspect of the invention, a position information processing method in a position information supply system including a position information processing terminal for transmitting position information indicative of a position of a user through a communication network and a server for receiving the position information from the communication network to supply position related information which is related to the position information to the position information processing terminal, wherein
the position information processing terminal side includes the step of
transmitting the position information when the position of the user is outside of a region set in advance.

According to a still further aspect of the invention, a position information processing method in a position information supply system including a position information processing terminal for transmitting position information indicative of a position of a user through a communication network and a server for receiving the position information from the communication network to supply position related information which is related to the position information to the position information processing terminal, wherein
the position information processing terminal side includes the steps of
determining whether the user has moved from outside into a region set in advance or moved out of the region based on the position information,
setting transmission enabled/disabled of the position information according to the determination result, and
transmitting the position information when the transmission enabled/disabled setting represents enabled.

According to the present invention, with a certain geological region set by a user, that is, with a region having a location that the user does not want to be known set at the side of a position information processing terminal, when the current position of the user is within the region, the information processing terminal refrains from transmitting position information to a position related information supply server. In addition, every time the user enters the certain region or every time the user comes out of the region, by alternately switching the user's position information between transmittable/non-transmittable to distinguish between business and private, the terminal refrains from transmitting position information at the private time every time the user passes through the certain specific region.

Other objects, features and advantages of the present invention will become clear from the detailed description given herebelow.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a block diagram showing a structure of a position information processing terminal according to a first embodiment of the present invention;
Fig. 2 is a block diagram showing an example of a structure of a position related information acquisition unit in the position information processing terminal according to the first embodiment of the present invention;
Fig. 3 is a block diagram showing an example of a structure of a region setting unit at the position information processing terminal according to the first embodiment of the present invention;
Fig. 4 is a flow chart for use in explaining operation of the position related information acquisition unit in the position information processing terminal according to the first embodiment of the present invention;
Fig. 5 is a diagram showing a storage state of a region storage unit at the region setting unit of the position information processing terminal according to the first embodiment;
Fig. 6 is a diagram for use in explaining effects of the first embodiment of the present invention;
Fig. 7 is a block diagram showing an example of a structure of a storage device according to a second embodiment of the present invention;
Fig. 8 is a flow chart for use in explaining operation of a position related information acquisition unit according to the second embodiment of the present invention;
Fig. 9 is a diagram showing a state of a region storage unit according to the second embodiment of the present invention;
Fig. 10 is a diagram showing a state of the storage device according to the second embodiment of the present invention;
Fig. 11 is a diagram showing a state of the storage device according to the second embodiment of the present invention;
Fig. 12 is a diagram for use in explaining effects of the second embodiment of the present invention;
Fig. 13 is a diagram for use in explaining effects of the second embodiment of the present invention;
Fig. 14 is a diagram for use in explaining a method of use according to the present invention; and
Fig. 15 is a block diagram showing an example of a structure of a position related information acquisition unit according to a third embodiment of the present invention.

### DESCRIPTION OF THE PREFERRED EMBODIMENT

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

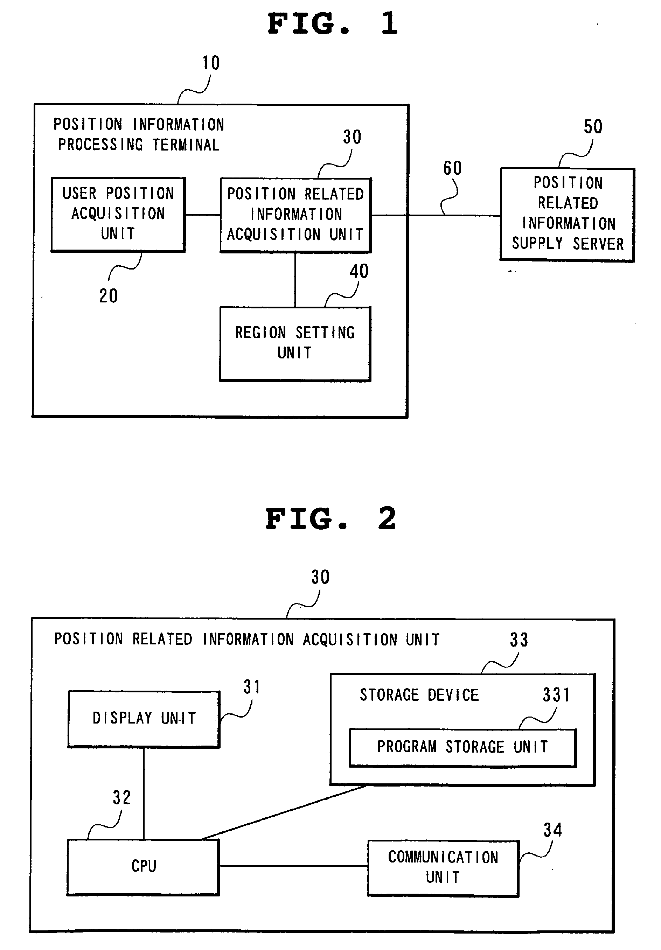

Fig. 1 is a diagram for use in explaining a structure of a position information processing terminal according to a first embodiment of the present invention. A position information processing terminal 10 in Fig. 1 is a position information processing terminal according to one embodiment of the present invention. With reference to Fig. 1, the position information processing terminal 10 includes a user position acquisition unit 20, a position related information acquisition unit 30 and a region setting unit 40.

The user position acquisition unit 20 has a function of obtaining a current position of a user and outputting the same. When a user himself/herself owns the position information processing terminal 10, such a measuring means as GPS (Global Positioning System) is usable as a user position acquisition unit. Similarly to the technique recited in Japanese Patent Laying-Open (Kokai) No. Heisei 11-308658, a measuring method using a radio base station can be also used as a user position acquisition unit.

Another possible arrangement is that with a user having another user terminal, the position information processing terminal 10 relays user's position information transmitted by the user terminal to a position related information supply server 50. In such a case, the user position acquisition unit 20 can be designed to include a communication device for receiving the user's position information from the user terminal and outputting the same.

The position related information acquisition unit 30 has a function of obtaining a user position from the user position acquisition unit 20 and when the user position is outside of a region set by the user by means of the region setting unit 40, generating a position related information request by using the user position and transmitting the same to the position related information supply server 50, and receiving position related information and displaying the same for the user.

Fig. 2 shows an example of a structure of the position related information acquisition unit 30. The position related information acquisition unit 30 includes a display unit 31, a CPU (central processing unit) 32, a storage device 33 and a communication unit 34. The display unit 31 has a function of displaying applied information for a user, an example of which unit is a display or a printer. The unit may also include a communication device for transmitting position related information to another terminal device that the user owns.

The CPU 32 reads a program from the storage deice 33 and executes the same, outputs an execution result to the display unit 31 for displaying a processing result and the communication unit 34 and receives information from the communication unit 34. The communication unit 34 has a function of transmitting applied information to a designated destination through a communication network.

The storage device 33 has a program storage unit 331 for storing a program to be executed by the CPU 32. Among examples of a structure of the device are such storage devices as a RAM, a ROM and a hard disc. The program is a program which describes processing conducted by the position related information acquisition unit.

The region setting unit 40 is a means by which a user is allowed to set a certain geographical region. By using the region setting unit 40, the user sets a geographical region where he/she wants to protect his/her privacy by refraining from sending his/her own position information to the position related information supply server 50, e.g., a region in the neighborhood of his/her house.

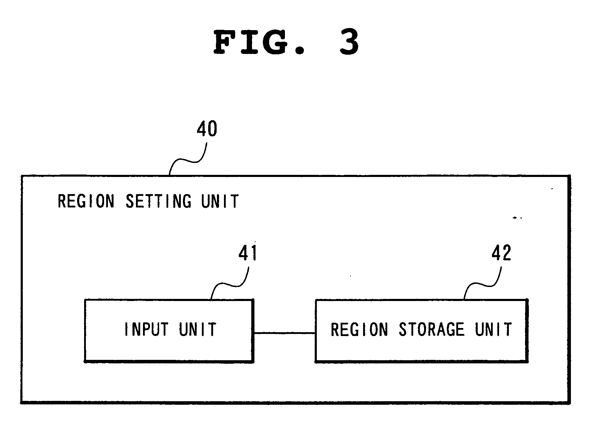

Fig. 3 shows an example of a structure of the region setting unit 40. The region setting unit 40 includes an input unit 41 for receiving input made by a user and a region storage unit 42 for storing a region input by the input unit 41. Among examples of a structure of the input unit 41 are a keyboard and a mouse.

As described above, another possible arrangement is that a user himself/herself conducts input for setting a region by using another terminal. In such a case, the input unit 41 may be designed to include a communication device for receiving input for the setting of a region which is sent from another terminal and storing the applied region in the region storage unit 42. Among examples of a structure of the region storage unit 42 are storage devices such as a RAM and a hard disc.

The position related information supply server 50 has a function of receiving a position related information request including a position through the communication network, generating information related to the position which is included in the position related information request as position related information and returning the generated position related information to a side where the position related information request is made.

Examples of the position related information supply server 50 include various servers such as a server which returns a weather forecast of a certain place when requested, a server which, upon transmission of a certain place, supplies a route to a nearest station from the place and a server which returns information about restaurants located within a radius of 100 meters from a sent position.

A communication network 60 mediates communication of information between the position information processing terminal 10 and the position related information supply server 50. As the communication network 60, any system that enables information communication can be used such as a telephone network, a radio public network, infrared communication and satellite communication.

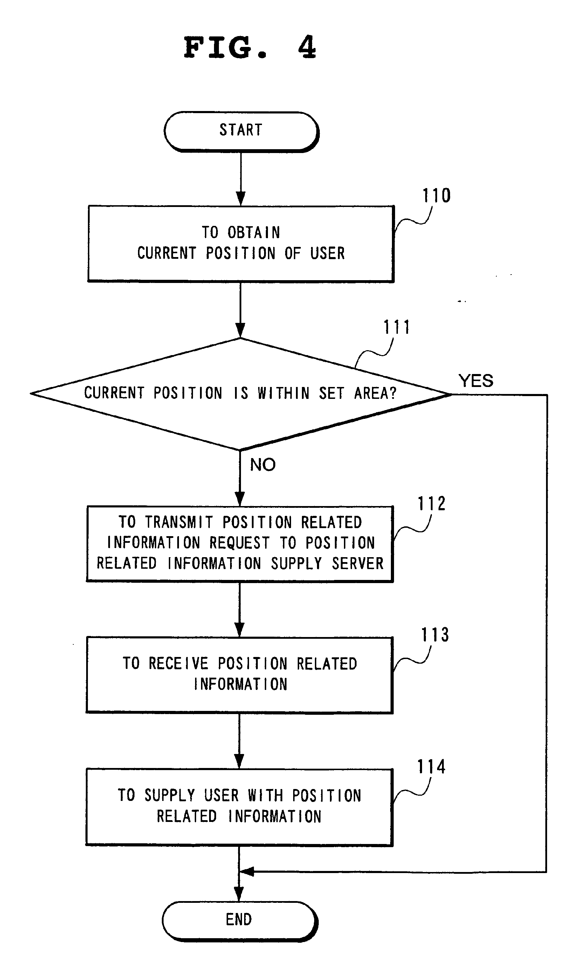

Operation of the first embodiment will be described. Fig. 4 is a flow chart showing operation of the position related information acquisition unit 30. The position related information acquisition unit 30 conducts operation shown in the flow chart every time the user position acquisition unit 20 outputs a position of a user. Here, description will be made of how a user protects privacy using the present invention. Assume that a user obtains position related information by using the position information processing terminal 10 while protecting his/her privacy.

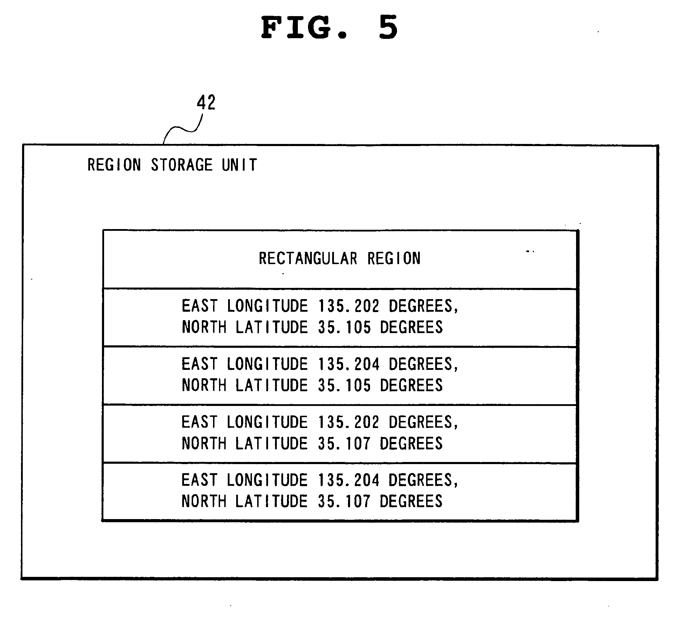

First, the user inputs a region at a position whose transmission is not wanted by the user by using the region setting unit 40. The input region is stored in the region setting unit 40. In a case, for example, where the region setting unit 40 is structured as shown in Fig. 3, a region input by the user is stored in the region storage unit 42 in a manner as illustrated in Fig. 5.

Next, the user position acquisition unit 20 obtains and outputs a current position of the user. The position related information acquisition unit 30 reads the position of the user (Step 110). Then, read the information stored in the region setting unit 40 to determine whether the current position falls within the region or not (Step 111).

If the position falls within the region (YES at Step 111), end the processing without transmitting the position.

If the position fails to fall within the region (NO at Step 111), generate a position related information request by using the position, transmit the same to the position related information supply server (Step 112), and receive position related information from the position related information supply server (Step 113) to display the position related information for the user (Step 114).

As described in the foregoing, with a position whose transmission is not wanted set by the user in advance, when a current position is within the region, the position information processing terminal refrains from transmitting the position of the user and when it is outside of the region, makes a request for position related information by using the position and receives the position related information to display the same for the user, thereby preventing transmission of position information within the region set by the user to protect privacy.

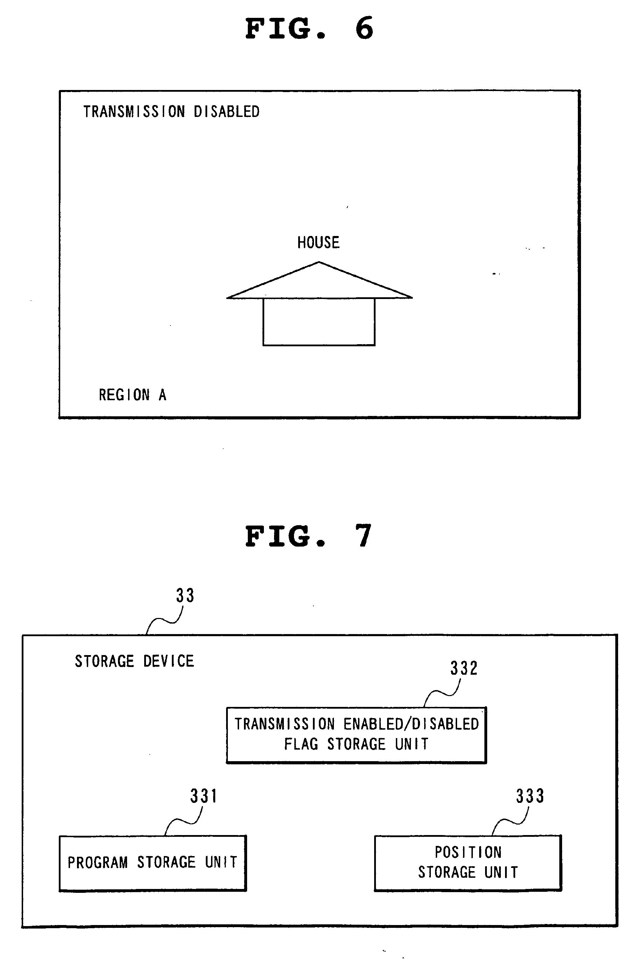

For example, as shown in Fig. 6, set a region A surrounding a house. Without the user's taking the trouble to set, when entering the region A to return home, such that position information will not be transmitted, transmission of no position information will be automatically made to protect privacy. Although one region is set in the present embodiment, the user is allowed to set as many regions as he/she wants and it is apparent that in such a case, the device operates without any problem. In addition, although illustrated here is only a case where configuration of the region is rectangular, the region may have any configuration such as triangular or circular as long as it is closed to distinguish between inside and outside of the region.

Second embodiment of the present invention will be described. Structure of the second embodiment is the same as that of the position information processing terminal 10 illustrated in Fig. 1 except the position related information acquisition unit 30. The difference from the first embodiment resides in structure and operation of the position related information acquisition unit 30 which uses information about a region set by a user. An example of a structure of the position related information acquisition unit 30 according to the second embodiment is obtained by replacing the storage device 33 in the structure of the position related information acquisition unit 30 shown in Fig. 2 by the storage device 33 shown in Fig. 7.

With reference to Fig. 7, the storage device 33 is characterized in having a transmission enabled/disabled flag storage unit 332 and a position storage unit 333 in addition to the program storage unit 331. In the transmission enabled/disabled flag storage unit, a binary value can be set and although two values, "transmission enabled" and "transmission disabled" are assumed to be used here, any binary value may be used such as "1" and "0" and "YES" and "NO". The position storage unit 333, which has a function of storing a position, is used for storing a terminal position of the past in the present embodiment.

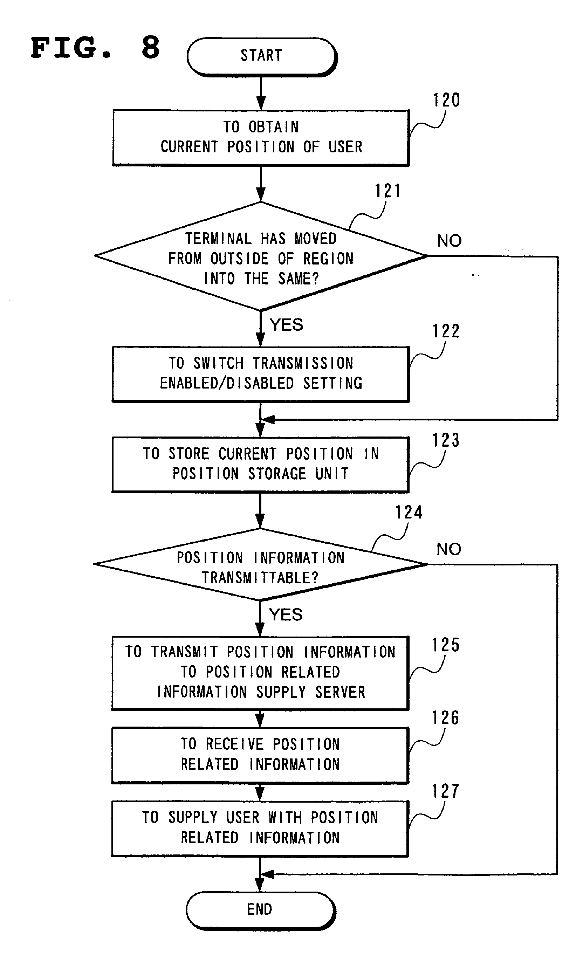

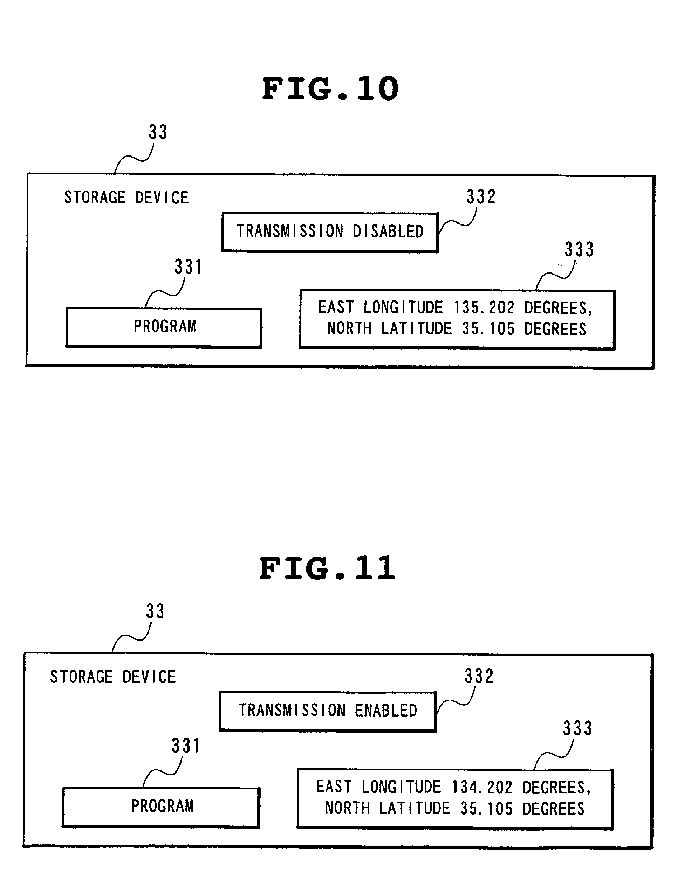

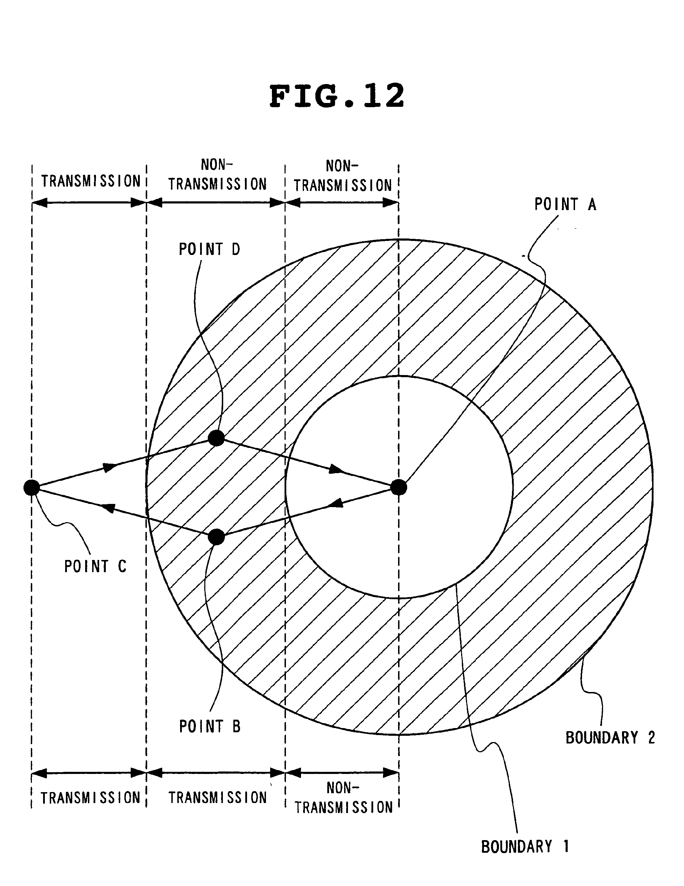

Operation of the second embodiment will be described. Fig. 8 is a flow chart showing operation of the position related information acquisition unit according to the second embodiment. Fig. 12 is a diagram for use in explaining operation of the second embodiment. Assume that at an initial state, a user locates himself/herself at a point A (east longitude 135.202 degrees, north latitude 35.105 degrees). Fig. 10 shows contents of the storage device 33 at this state.

Stored in the transmission enabled/disabled flag storage unit 332 is "transmission disabled" and stored in the position storage unit are the east longitude 135.202 degrees and the north latitude 35.105 degrees which are latitude and longitude of the point A where the user locates himself/herself. Assume that initial setting of the transmission enabled/disabled flag storage unit 332 is made according to a current position where the user is located and made by user's setting operation.

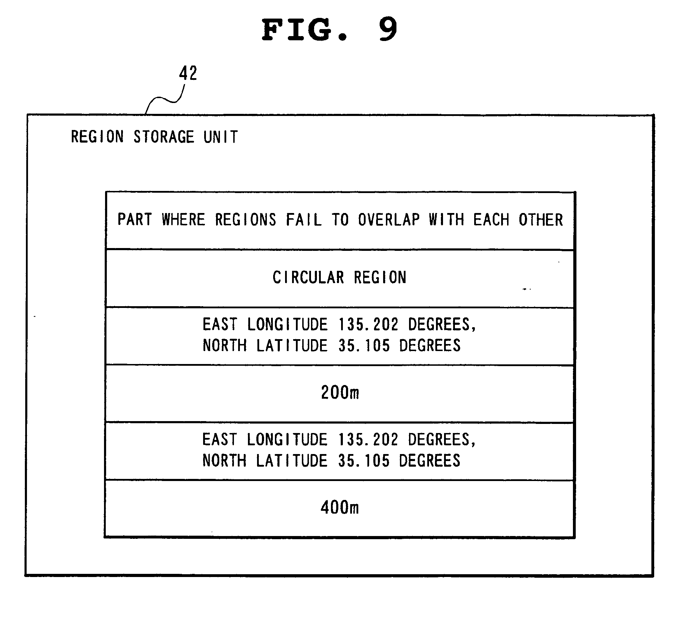

First, the user inputs and stores a region by using the region setting unit 40. Fig. 9 is a diagram showing a state of the region storage unit 42 of the region setting unit 40. "Circular region" represents configuration of the region, "east longitude 135.202 degrees, north latitude 35.105 degrees" and "200m" represent a circular region having a radius of 200m centered around the east longitude 135.202 degrees and the north latitude 35.105 degrees and "east longitude 135.202 degrees, north latitude 35.105 degrees" and "400m" represent a circular region having a radius of 400m centered around the east longitude 135.202 degrees and the north latitude 35.105 degrees.

In Fig. 12, the former represents a region inside of a boundary 1 and the latter represents a region inside of a boundary 2. Then, "part where regions fail to overlap with each other" represents that the user designates a part where these two regions fail to overlap with each other as a region. In the present example, a hatched part in Fig. 12 will be a region designated by the user.

Next, the user position acquisition unit 20 obtains and outputs a position of the user. The position related information acquisition unit 30 obtains a current position of the user (Step 120). Then, determine whether the user of the terminal has moved from the outside of the region designated into the region (Step 121). As a determination method, a user position of the past stored in the position storage unit 333 is used. When no position is stored in the position storage unit 333, determination is made that the terminal has not moved from the outside of the region into the same.

When both the position stored in the position storage unit 333 and the current position fall within the region or when both the positions are outside of the region, the terminal has not moved from the outside of the region into the same. When the position stored in the position storage unit 333 is outside of the region and the current position is within the region, determination is made that the terminal has moved into the region from outside. Also when the position stored in the position storage unit 333 is within the region, determination is made that the terminal has not moved into the region from outside.

In this case, since the terminal is at the point A and has not moved into the region from outside (NO at Step 121), store the current position (Step 123). State of the storage device 33 at this time remains the same as that shown in Fig. 10. Next, check the transmission enabled/disabled flag storage unit 332 to determine whether position information is transmittable or not (Step 124). In the present example, since the transmission enabled/disabled flag indicates "transmission disabled" (NO at Step 124), end the processing without further operation.

Next, assume that the user has moved from the point A to a point B in Fig. 12. First, the user position acquisition unit 20 obtains and outputs a position of the user. The position related information acquisition unit 30 obtains a current position of the user (Step 120). Then, determine whether the terminal has moved from the outside of the region designated by the user into the same (Step 121). In this case, since the terminal has moved from the outside of the region into the same (YES at Step 121), invert the value of the transmission enabled/disabled flag storage unit 332 (Step 122). In this case, change the mode from "transmission disabled" to "transmission enabled". Then, store the current position (Step 123). State of the storage device 33 at this time is shown in Fig. 11

In the position storage unit 333, "east longitude 134.202 degrees, north latitude 35.105 degrees" as latitude and longitude of the point B is stored and the content of the transmission enabled/disabled flag storage unit 332 indicates "transmission enabled". Next, check the transmission enabled/disabled flag storage unit 332 to determine whether the position information is transmittable or nor (Step 124). In this example, since the transmission enabled/disabled flag indicates "transmittable" (YES at Step 124), transmit a position related information request to the position related information supply server 50 by using the current position and receive the position related information to display the received position related information for the user (Steps 125 to 127).

As described in the foregoing, in the operation of the second embodiment, the position information processing terminal switches position information between "transmission" and "non-transmission" every time the user enters a designated region from outside. Then, according to the result, using the current position, the terminal makes or does not make a request for position related information.

Fig. 12 shows whether position information is to be transmitted or not at each path when the user moves from the point A, the point B, a point C to a point D in this order. In this example, when the user locates himself/herself within a region 1, no position information is transmitted to protect privacy. Then, the effect is realized by the operation of setting a region by a user and conducting switch between transmission enabled and disabled when the user moves into the region from outside as described above. Thus, although the manner of setting a region and operation of the position information processing terminal are different from those of the embodiment described first, the same effect can be obtained.

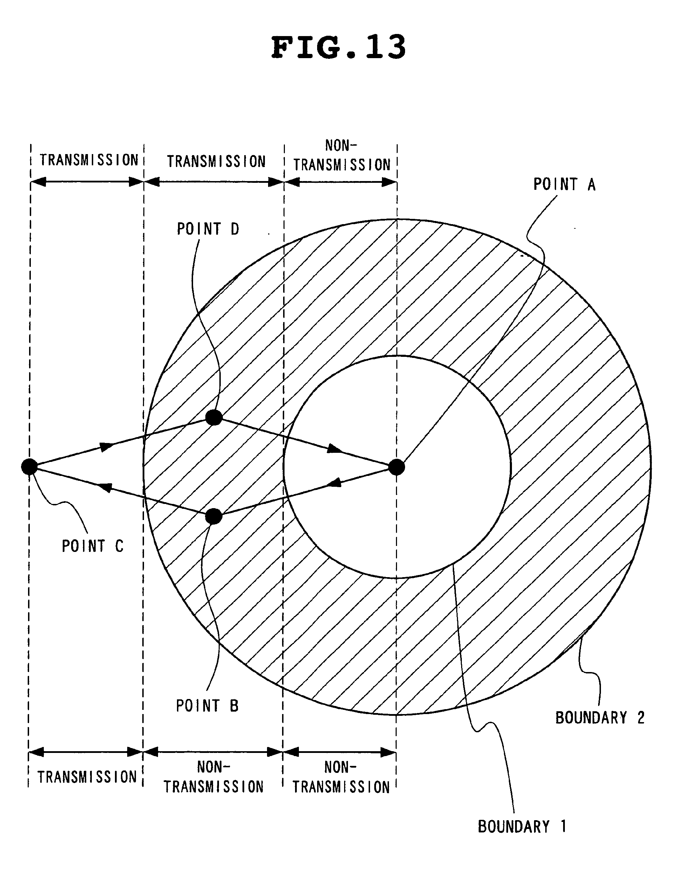

Also possible is operation of switching between transmission enabled and disabled not when the user enters the region from outside but when he/she comes out from the region. In this case, a relationship between a region and position information transmission enabled/disabled is as shown in Fig. 13, in which when the user is within a region surrounded by the boundary 1, no position information is transmitted to protect privacy as well.

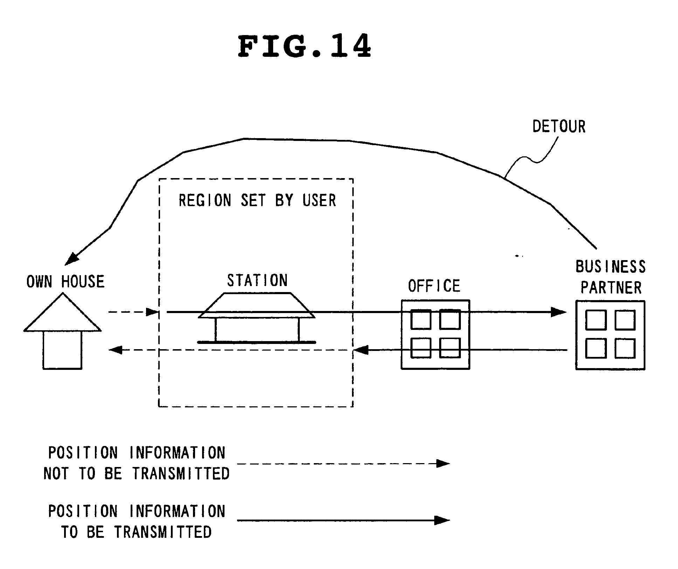

Another example of operation of the second embodiment will be described. Fig. 14 is a diagram for use in explaining conditions. As illustrated in Fig. 14, the user sets a station which he/she uses when commuting without fail as a region. Operation of the position related information acquisition unit 30 is the same as that of the position related information acquisition unit 30 in the previous embodiment. From a user's home to the neighborhood of the station, position is not to be transmitted and when he/she passes the station to go to the office and thereafter during his/her business hours, the position is transmitted to obtain position related information and then when entering the region on the way home, the position will be non-transmittable.

Thus, the present embodiment enables operation of obtaining position related information only on business and automatically refraining from transmitting a position in private time, thereby protecting privacy to produce a desirable effect.

There remains, however, a problem that occurs when a user fails to pass through a set region. Also, with the current measuring techniques, measurement might fail to have a case where even when a user actually passes through the region, no determination is made of the fact. In this case, transmission and non-transmission of position information will be the reverse of operation intended by the user.

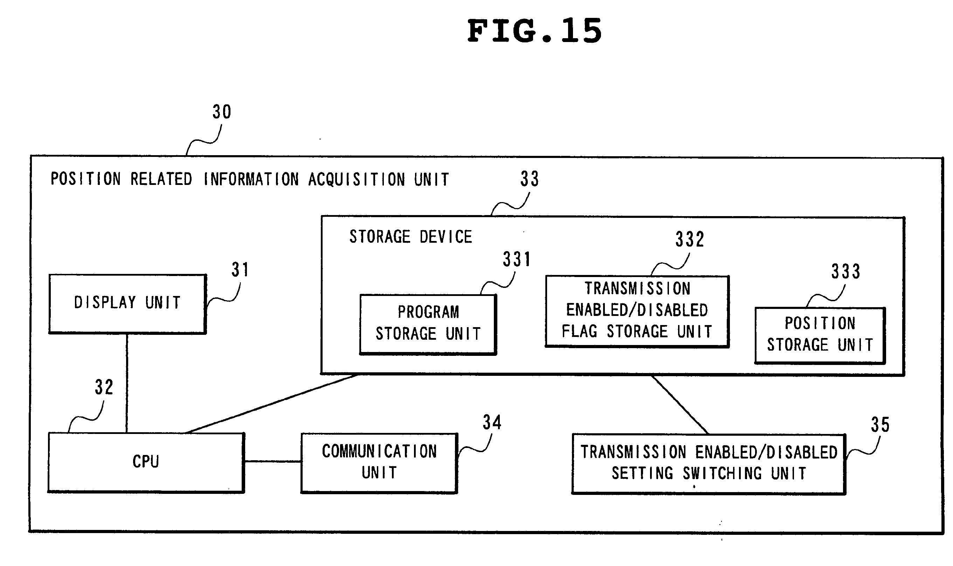

Therefore, a position information processing terminal according to a third embodiment intended to solve the problem is characterized in adding a transmission enabled/disabled setting switching unit 35 to the position related information acquisition unit 30 of the second embodiment as illustrated in Fig. 15.

The transmission enabled/disabled setting switching unit 35 has a function of allowing a user to invert transmission enabled/disabled setting stored in the transmission enabled/disabled flag storage unit 332. When a user notices that transmission/non-transmission of position information is the reverse of that intended by the user because he/she fails to pass through the region set by himself/herself, by inverting transmission enabled/disabled setting by using the transmission enabled/disabled setting switching unit, the user is allowed to return the operation of transmitting or not transmitting position information of the user terminal to an intended state.

Although in the present embodiment, the region is configured to be rectangular, it may take any closed configuration such as a triangle and a circle. In addition, although switching between transmission and non-transmission of position information is made upon user's entering a region from outside, it is apparent that switching may be made upon user's coming out from the region.

As described in the foregoing, with a region set by a user in advance, refraining from transmitting position information when the user is within the region or switching transmission and non-transmission of position information at a boundary of the region enables protection of privacy. This is because setting a region in advance eliminates the user's need of turning on/off of the terminal while worrying about whether his/her current position is one that he/she does not want to be known to others and enables the terminal to automatically determine whether transmission of position information is enabled or disabled. As a result, the user is allowed to continue operating the position related information reception terminal without anxiety to reduce laborious procedures, which is suitable for users.

Moreover, even if the position information processing terminal operates oppositely to user's intention by any chance, provision of the transmission enabled/disabled setting switching unit by which a user is allowed to invert position information transmission enabled/disabled setting enables the operation of the terminal to be returned to that conforming to the user's intention, which is suitable for users.

Although the invention has been illustrated and described with respect to exemplary embodiment thereof, it should be understood by those skilled in the art that the foregoing and various other changes, omissions and additions may be made therein and thereto, without departing from the spirit and scope of the present invention. Therefore, the present invention should not be understood as limited to the specific embodiment set out above but to include all possible embodiments which can be embodies within a scope encompassed and equivalents thereof with respect to the feature set out in the appended claims.

## Claims

1. A position information processing terminal (10) for transmitting position information indicative of a position of a user to a server (50) through a communication network (60) and receiving position related information which is related to said position information from said server (50), comprising
means for transmitting said position information when the position of said user is outside of a region set in advance.

2. The position information processing terminal according to claim 1, further comprising:
region setting means (40) for setting and storing said region, and
means (30) for determining whether said position information represents the outside of said region or not and when the information represents the outside of the region, transmitting said position information to said server through said communication network (60).

3. The position information processing terminal according to claim 2, wherein
said region setting means (40) includes input means (41) for receiving input of a set region and storage means (42) for storing an input region.

4. A position information processing terminal (10) for transmitting position information indicative of a position of a user to a server (50) through a communication network (60) and receiving position related information which is related to said position information from said server (50), comprising:
means (35) for determining whether said user has moved from outside into a region set in advance or moved out of the region based on said position information to set transmission enabled/disabled of said position information according to the determination result, and
means for transmitting said position information when said transmission enabled/disabled setting represents enabled.

5. The position information processing terminal according to claim 4, further comprising:
storage means (333) for storing position information of said user, and
a transmission enabled/disabled flag storage means (332) for storing information of said transmission enabled/disabled set, wherein
determination is made based on a current position of said user which is newly obtained and the position information stored in said storage means whether said user has moved from outside into the region set in advance or moved out of the region.

6. A position information processing method in a position information processing terminal for transmitting position information indicative of a position of a user to a server through a communication network and receiving position related information which is related to said position information from the server, comprising the step of
transmitting said position information when the position of said user is outside of a region set in advance.

7. The position information processing method according to claim 6, further comprising the steps of:
setting and storing said region, and
determining whether said position information represents the outside of said region or not and when the information represents the outside of the region, transmitting said position information to said server through said communication network.

8. A position information processing method in a position information processing terminal for transmitting position information indicative of a position of a user to a server through a communication network and receiving position related information which is related to said position information from the server, comprising the steps of:
determining whether said user has moved from outside into a region set in advance or moved out of the region based on said position information,
setting transmission enabled/disabled of said position information according to said determination result, and
transmitting said position information when said transmission enabled/disabled setting represents enabled.

9. A program for making a computer to execute a position information processing method in a position information processing terminal for transmitting position information indicative of a position of a user to a server through a communication network and receiving position related information which is related to said position information from said server, comprising the function of
transmitting said position information when the position of said user is outside of a region set in advance.

10. A program for making a computer to execute a position information processing method in a position information processing terminal for transmitting position information indicative of a position of a user to a server through a communication network and receiving position related information which is related to said position information from the server, comprising the functions of:
determining whether said user has moved from outside into a region set in advance or moved out of the region based on said position information,
setting transmission enabled/disabled of said position information according to said determination result, and
transmitting said position information when said transmission enabled/disabled setting represents enabled.

11. A position information supply system including a position information processing terminal (10) for transmitting position information indicative of a position of a user through a communication network (60) and a server (50) for receiving said position information from said communication network to supply position related information which is related to said position information to said position information processing terminal(10), wherein
said position information processing terminal (10)
transmits said position information when the position of said user is outside of a region set in advance.

12. A position information supply system including a position information processing terminal (10) for transmitting position information indicative of a position of a user through a communication network (60) and a server (50) for receiving said position information from said communication network to supply position related information which is related to said position information to said position information processing terminal (10), wherein
said position information processing terminal (10) includes:
means (30) for determining whether said user has moved from outside into a region set in advance or moved out of the region based on said position information and setting transmission enabled/disabled of said position information according to the determination result, and
transmission means for transmitting said position information when said transmission enabled/disabled setting represents enabled.

13. A position information processing method in a position information supply system including a position information processing terminal for transmitting position information indicative of a position of a user through a communication network and a server for receiving said position information from said communication network to supply position related information which is related to said position information to said position information processing terminal, wherein
said position information processing terminal side includes the step of
transmitting said position information when the position of said user is outside of a region set in advance.

14. A position information processing method in a position information supply system including a position information processing terminal for transmitting position information indicative of a position of a user through a communication network and a server for receiving said position information from said communication network to supply position related information which is related to said position information to said position information processing terminal, wherein
said position information processing terminal side includes the steps of:
determining whether said user has moved from outside into a region set in advance or moved out of the region based on said position information,
setting transmission enabled/disabled of said position information according to said determination result, and
transmitting said position information when said transmission enabled/disabled setting represents enabled.
